Europäisches Patentamt

European Patent Office

Office européen des brevets

(19)

(11) **EP 0 742 673 A2**

(12) **EUROPÄISCHE PATENTANMELDUNG**

(43) Veröffentlichungstag:
13.11.1996 Patentblatt 1996/46

(51) Int Cl.[6]: **H04N 7/26**

(21) Anmeldenummer: 96201220.9

(22) Anmeldetag: 02.05.1996

(84) Benannte Vertragsstaaten:
**DE FR GB SE**

(30) Priorität: 06.05.1995 DE 19516743

(71) Anmelder:
• **Philips Patentverwaltung GmbH**
  **22335 Hamburg (DE)**
  Benannte Vertragsstaaten:
  **DE**
• **Philips Electronics N.V.**
  **5621 BA Eindhoven (NL)**
  Benannte Vertragsstaaten:
  **FR GB SE**

(72) Erfinder:
• **Ibenthal, Achim,**
  **c/o Philips Patentverwaltung Gmbh**
  **22335 Hamburg (DE)**
• **Götting, Detlef,**
  **c/o Philips Patentverwaltung Gmbh**
  **22335 Hamburg (DE)**
• **Grigat, Rolf-Rainer Prof.Dr.-Ing.**
  **22335 Hamburg (DE)**

(74) Vertreter: **von Laue, Hanns-Ulrich, Dipl.-Ing. et al**
  **Philips Patentverwaltung GmbH,**
  **Röntgenstrasse 24**
  **22335 Hamburg (DE)**

(54) **Verfahren zur Bilddatenreduktion mittels fraktaler Bildcodierung sowie Encoder und Decoder zur Durchführung des Verfahrens**

(57) Bei einem Verfahren zur Datenreduktion eines Luminanz- und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke doppelte Größe der Rangeblöcke aufweisen, und bei der Informationen über die Transformationsfunktionen übertragen werden, aus denen empfängerseitig in einem iterativen Prozeß die Bilddaten zurückgewonnen werden, ist zur Vereinfachung der Suche nach geeigneten Domainblöcken vorgesehen, daß die Daten jedes Rangeblocks auf geometrische Grundfunktionen untersucht werden. die die Datenstruktur des Rangeblockes möglichst gut angenähert wiedergeben. daß ein Differenzwert aus der gefundenen Grundfunktion, die die Datenstruktur des Rangeblockes am besten erfaßt, und den Daten des Rangeblocks berechnet wird, wobei dieser Differenzwert eine verbleibende Restrauhigkeit repräsentiert. daß die Daten der Domainblöcke auf geometrische Grundfunktionen untersucht werden, die die Datenstruktur des Domainblockes möglichst gut angenähert wiedergeben, daß ein Differenzwert aus der gefundenen Grundfunktion, die die Datenstruktur des Domainblockes am besten erfaßt, und den Daten des Domainblocks berechnet wird, wobei dieser Differenzwert eine verbleibende Restrauhigkeit repräsentiert, daß die Suche des Domainblockes, der auf einen Rangeblock mit der geringsten Abweichung abbildbar ist, und der zugeordneten Transformationsfunktion anhand der berechneten Differenzwerte des Rangeblockes und der berechneten Differenzwerte der Domainblöcke vorgenommen wird und daß für jeden Rangeblock Informationen über die miteinander verrechneten Grundfunktionen dieses Blocks, des als günstigsten ermittelten Domainblocks sowie die Transformationsfunktion, mittels derer der als günstigster ermittelte Domainblock auf den Rangeblock abbildbar ist, als datenreduzierter Datenstrom anstelle des Luminanz-/Farb-Signals übertragen werden.

FIG. 4b

**Beschreibung**

Die Erfindung bezieht sich auf ein Verfahren zur Datenreduktion eines Luminanz-und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke eine größere Größe als die Rangeblöcke aufweisen, und bei der Informationen über die Transformationsfunktionen übertragen werden, aus denen empfängerseitig in einem iterativen Prozeß die Bilddaten zurückgewonnen werden, sowie auf Anordnungen zur Durchführung des Verfahrens.

Ein Verfahren zur Datenreduktion eines Bildsignals oder von Komponenten eines Bildsignals mittels fraktaler Bildcodierung, bei dem ein Bild in Rangeblöcke und Domainblöcke unterteilt wird, ist aus "Image Coding Based on a Fractal Theory of Iterated Contractive Image Transformation, Arnaud E. Jacquin, IEEE Transactions on Image Processing, Vog. 1 (1), Seiten 18 bis 30, Januar 1992" bekannt. Gemäß Jacquin wird ein Bild eines Bildsignals in sogenannte Rangeblöcke zerlegt. Jedem Rangeblock wird eine Funktion zugeordnet, die für sich die Eigenschaft der Kontraktivität besitzen sollte und einen beliebigen, als Domainblock bezeichneten Block auf dem Rangeblock abbildet. Diese Funktionen aller Rangeblöcke eines Bildes zusammen bilden ein sogenanntes Funktionensystem, das auch als iteratives Funktionensystem bezeichnet wird.

Encoderseitig besteht bei diesem Verfahren das Problem, daß für jeden Rangeblock ein Domainblock gefunden werden muß, der unter Anwendung der gefundenen Transformationen mit geringstmöglichen Fehlern auf den Rangeblock abbildbar ist. Dazu müssen alle fraglichen Domainblöcke auf diese Kriterien untersucht werden. Dabei ist zu bedenken, daß die Domainblöcke grundsätzlich beliebig im Bild angeordnet sein können. Es ist also z.B. ein Block von 2n x 2n Bildpunkten nicht nur in seiner Ursprungslage zu untersuchen, sondern auch beispielsweise um 90°, 180° und 270° in verschiedenen Richtungen gedreht. Damit ergibt sich für den Suchvorgang eines geeigneten Domainblockes für jeden Rangeblock eines Bildes ein beträchtlicher Suchaufwand.

Es ist Aufgabe der Erfindung, diesen Suchaufwand zu verringern.

Diese Aufgabe ist erfindungsgemäß dadurch gelöst, daß die Daten jedes Rangeblocks auf geometrische Grundfunktionen untersucht werden, die die Datenstruktur des Rangeblockes möglichst gut angenähert wiedergeben, daß ein Differenzwert aus der gefundenen Grundfunktion, die die Datenstruktur des Rangeblocks am besten erfaßt, und den Daten des Rangeblocks berechnet wird, wobei dieser Differenzwert eine verbleibende Restrauhigkeit repräsentiert, daß die Daten der Domainblöcke auf geometrische Grundfunktionen untersucht werden, die die Datenstruktur des Domainblockes möglichst gut angenähert wiedergeben, daß ein Differenzwert aus der gefundenen Grundfunktion, die die Datenstruktur des Domainblockes am besten erfaßt, und den Daten des Domainblocks berechnet wird, wobei dieser Differenzwert eine verbleibende Restrauhigkeit repräsentiert, daß die Suche des Domainblockes, der auf einen Rangeblock mit der geringsten Abweichung abbildbar ist, und der zugeordneten Transformationsfunktion anhand der berechneten Differenzwerte des Rangeblockes und der berechneten Differenzwerte der Domainblöcke vorgenommen wird und daß für jeden Rangeblock Informationen über die miteinander verrechneten Grundfunktionen dieses Blocks, des als günstigsten ermittelten Domainblocks sowie die Transformationsfunktion, mittels derer der als günstigster ermittelte Domainblock auf den Rangeblock abbildbar ist, als datenreduzierter Datenstrom anstelle des Luminanz-/Farb-Signals übertragen werden.

Bei der fraktalen Bildkompression wird ein Bild durch ein System von Funktionen vollständig beschrieben. Dieses Funktionensystem bildet ein Bild auf ein anders geartetes Bild ab. Für die Codierung hat dieses Funktionensystem die Eigenschaft der Kontraktivität zu erfüllen. Unter dieser Voraussetzung konvergiert eine Folge von Bildern bei iterativer Anwendung des Funktionensystems gegen einen Fixpunkt. Deshalb wird dieses Funktionensystem auch als iteratives Funktionensystem bezeichnet.

Es ist dabei aus Jacquin bekannt, ein Bild eines Bildsignals oder eines Luminanz-oder Farb-Signals dieses Bildsignals in Rangeblöcke zu unterteilen. Diese Rangeblöcke überlappen sich nicht, erfassen umgekehrt aber alle Bildelemente. Für jeden Rangeblock wird nun ein Domainblock des Bildes gesucht. Dieser Domainblock soll die Eigenschaft aufweisen, unter Anwendung einer Transformationsfunktion mit möglichst wenig Abweichung auf den Rangeblock abbildbar zu sein. Die Summe aller dieser Transformationsfunktionen für ein Bild ist das oben beschriebene Funktionensystem. Dieses muß so geartet sein, daß es decoderseitig, also bei Rückgängigmachung der Datenreduktion, bei iterativer Anwendung den vollständigen Bildinhalt wieder herstellt.

Dabei wird dieses Funktionensystem iterativ auf ein beliebiges Startbild angewendet. Nach einer variablen oder vorgebbaren Zahl von Iterationen wird schließlich das Ausgangsbild, das übertragen werden soll, errechnet.

Erfindungsgemäß wird das Verfahren dahingehend weiterentwickelt, daß der Suchvorgang, in dem für jeden Rangeblock ein geeigneter Domainblock gesucht wird, der unter Anwendung der zugeordneten Transformationsfunktion (die gefunden werden muß) mit möglichst wenig Abweichung auf diesen Rangeblock abbildbar ist, weiter vereinfacht wird. Da dieser Vorgang für jeden Rangeblock eines Bildes durchgeführt werden muß, ist eine Vereinfachung bzw. Verkürzung der Suche von großer Bedeutung.

Diese Vereinfachung wird erfindungsgemäß dadurch durchgeführt, daß zunächst die Daten eines Rangeblockes, für den der günstigste Domainblock gesucht werden soll, auf geometrische Grundfunktionen untersucht werden. Dazu kann die Datenstruktur dieses Blocks beispielsweise in eine serielle Folge von Bilddaten, die die Bildpunkte dieses Blockes repräsentieren, umgeformt werden. Diese Folge von Bilddaten kann nun auf geometrische Grundfunktionen untersucht werden, die den Grundverlauf dieser Datenstruktur bereits wiedergeben. Es bleibt dann eine sogenannte Restrauhigkeit, die dadurch gebildet wird, daß aus den ursprünglichen Daten des Rangeblockes die Daten entsprechend der gefundenen geometrischen Grundfunktionen subtrahiert werden. Der dann entstehende Differenzwert, der die Restrauhigkeit bildet, wird dann bei der Suche nach einem geeigneten Domainblock verwendet.

In entsprechender Weise werden die Daten aller Domainblöcke, unter denen nun ein geeigneter gesucht wird, zunächst ebenfalls auf geometrische Grundfunktionen untersucht. Wird eine geeignete geometrische Grundfunktion, die die Datenstruktur der jeweiligen Domainblöcke jeweils näherungsweise wiedergibt, gefunden, so wird entsprechend dieser Funktion ein Grundanteil entsprechend der gefundenen geometrischen Grundfunktion von jedem Domainblock subtrahiert. Es verbleibt dann wiederum der Differenzwert, der die Restrauhigkeit erfaßt.

Der oben beschriebene Differenzwert der Restrauhigkeit des Rangeblockes wird nun mit den Differenzwerten aller Domainblöcke daraufhin verglichen, welcher dieser Domainblöcke unter Anwendung einer Transformationsfunktion den verbleibenden Differenzwert des Domainblockes möglichst fehlerarm auf den verbleibenden Differenzwert des Rangeblockes abbildet.

Wiedergabeseitig müssen dann diese Transformationsfunktionen, die das oben beschriebene Funktionensystem bilden, übertragen werden. Zusätzlich müssen Informationen über die geometrischen Grundfunktionen, die für den Rangeblock und den zugeordneten Domainblock gefunden wurden, übertragen werden. Diese Informationen können auch in Form einer Differenzbildung dieser beiden geometrischen Grundfunktionen übertragen werden.

Dadurch, daß bei der Suche eines geeigneten Domainblockes für jeden Rangeblock nicht mehr die gesamte Datenstruktur der Blöcke untersucht werden muß, sondern nur die oben beschriebenen Differenzwerte, die die Restrauhigkeit dieser Blöcke darstellen, nachdem die geometrische Grundfunktion von den Daten des Blocks subtrahiert wurde, ergibt sich eine vereinfachte Suche. Durch die Subtraktion der Grundfunktionen spielt für die Datenstruktur der verglichenen Blöcke beispielsweise deren absolute Amplitude, also Bildhelligkeit, keine Rolle. Entsprechendes gilt beispielsweise auch für übertragene Kanten. So kann eine Kante eines Rangeblockes zwar eine andere Kantenhöhe als beispielsweise eine ähnliche Kante eines Domainblockes haben, der Kantenverlauf als solcher ist aber ähnlich. Durch die Subtraktion der geometrischen Grundfunktionen werden damit quasi nur noch die Strukturen der Blöcke untersucht, nicht die absolute Amplitude oder Anordnung, die sich auch im Verlaufe des Bildinhaltes des Blockes entsprechend einer geometrischen Grundfunktion ändern kann. Damit ist der Suchvorgang erheblich erleichtert, da ähnliche Strukturen ohne Berücksichtigung von überlagerten geometrischen Grundfunktionen erheblich leichter zu finden sind.

Damit tritt neben einer vereinfachten Suche auch eine Verbesserung der Bildqualität ein.

Gemäß bevorzugter Ausgestaltungen der Erfindung können als geometrische Grundfunktionen, auf die die Datenstruktur der Blöcke untersucht werden, vorteilhaft Polynome n-ter Ordnung, harmonische Funktionen, Walsh-Hadamard Transformationen, oder Waveletfunktionen vorgesehen sein. Die Anwendung dieser Funktionen, die grundsätzlich bekannt sind, auf die fraktale Bildcodierung in oben angegebener Weise, hat den Vorteil, daß die noch zu untersuchenden Restrauhigkeiten leichter gefunden werden können.

Die Walsh-Hadamard Transformationen bzw. die Waveletfunktionen sind bekannt aus "Digital Image Processing", von W. Pratt, John Wiley & Sons, 1991, Seiten 209 bis 219, und aus "Orthonormal Bases of Compactly Supported Wavelets", von I. Danbechies, Comm. Pure Appl. Math., 41, Seiten 909 bis 996, 1988.

Auf derartige Weise fraktal codierte Bildsignale eignen sich in besonderer Weise zur Übertragung von Bildsignaldaten, da eine beträchtliche Datenreduktion eintritt. Wie gemäß weiterer Ausgestaltungen der Erfindung vorgesehen ist, eignen sich derartig fraktal codierte Bildsignale insbesondere zur Aufzeichnung auf Informationsträgern, zur Abspeicherung in Speichermedien, beispielsweise für Datenbankanwendungen, und zur Verwendung als Rundfunksignal.

Nachfolgend wird die Erfindung anhand eines Ausführungsbeispieles näher erläutert. Es zeigen:

Fig. 1 einen Encoder zur Durchführung des erfindungsgemäßen Verfahrens,

Fig. 2 einen Decoder zur Durchführung des erfindungsgemäßen Verfahrens,

Fig. 3 eine schematische Darstellung eines Beispieles der Suche eines günstigen Domainblockes für einen Rangeblock und

Fig. 4 ein Beispiel für die Subtraktion einer geometrischen Grundfunktion von einem Block.

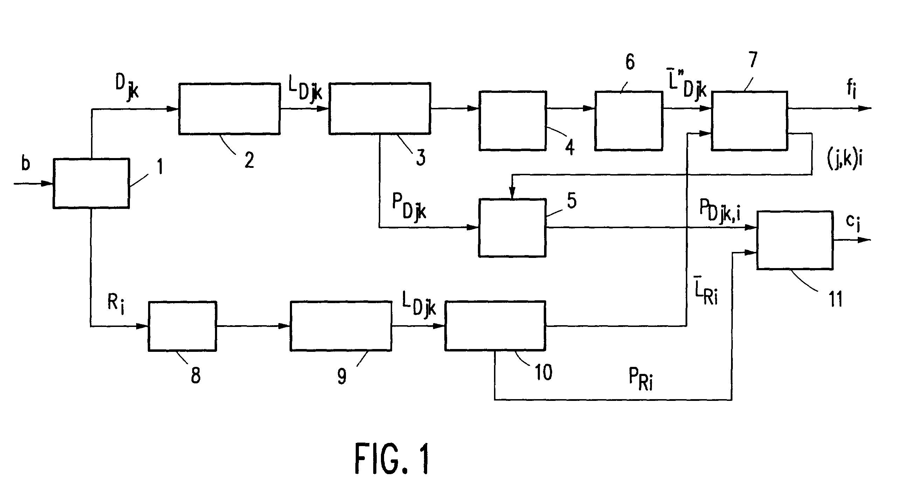

Fig. 1 zeigt ein Blockschaltbild eines Encoders, der mit fraktaler Bildcodierung gemäß der Erfindung arbeitet und welcher mit dem erfindungsgemäßen Verfahren arbeitet, wobei von den Daten der gebildeten Blöcke Polynomterme als geometrische Grundfunktionen abgespaltet werden.

Dem Encoder wird eingangsseitig ein digitales Bildsignal b zugeführt, bei dem es sich um ein zeilenweise ausgelesenes Bild handelt. In dem Bildsignal liegen also die Bilddaten der einzelnen Bildpunkte zeitlich aufeinander folgend vor.

Dieses Bildsignal gelangt in dem Encoder zu einem Schaltungsblock 1, in dem eine Blockbildung vorgenommen wird. In den Daten aller Bildpunkte eines Bildes werden sogenannte Rangeblöcke und sogenannte Domainblöcke festgelegt. Die Rangeblöcke umfassen jeweils n x n Bildpunkte. Alle Rangeblöcke zusammen erfassen den gesamten Bildinhalt eines Bildes. Die Domainblöcke weisen eine Größe von 2n x 2n auf. Im Ergebnis werden durch den Encoder Domainblöcke gesucht, die sich möglichst gut, d.h. mit möglichst wenig Fehlern, auf die Rangeblöcke abbilden lassen. Dieser Vorgang wird für jeden einzelnen Rangeblock vorgenommen.

Dabei wird für jeden Rangeblock nicht nur der Domainblock in seiner ursprünglichen Form verglichen, sondern es werden Abbildungsfunktionen gesucht, bei deren Anwendung der Domainblock optimal auf einen jeweiligen Rangeblock abgebildet wird. Der Encoder liefert letztlich als Ausgangssignal diese Funktionen.

In der Figur sind die Domainblöcke mit $D_{jk}$ und die Rangeblöcke mit $R_i$ gekennzeichnet.

Die Daten der Domainblöcke $D_{jk}$ werden in dem Schaltungselement 2 seriell aufgereiht, d.h. die Bildpunkte eines Blocks werden sequentiell aufgereiht. Der Vektorkonstruktion 2 ist eine Anordnung 3 zur Abspaltung der Polynomterme nachgeschaltet. Diese hat die Aufgabe, die Polynome zu finden und abzuspalten, die am besten den tatsächlichen Bildverlauf des betreffenden Blockes annähern. Diese Polynomterme sind in der Fig. 1 mit $P_{Djk}$ gekennzeichnet.

Der verbleibende Teil des Bildes, also die Differenz zwischen dem tatsächlichen Bildinhalt und den Polynomtermen, der im folgenden als Restrauhigkeit bezeichnet wird, ist in der Figur als $\bar{L}_{Djk}$ bezeichnet. Dieser Anteil gelangt an einen Speicher 4, in dem diese Restrauhigkeit abgespeichert wird. Entsprechendes geschieht mit den Polynomtermen in einem Parameterspeicher 5. Das Ausgangssignal des Speichers 4 gelangt auf einen Schaltungsblock 6, in dem die Restrauhigkeit weiter bearbeitet wird. In ihrer Ursprungsform liegt diese Restrauhigkeit für den Domainblock nur in einer bestimmten Anordnung in dem Bild vor. Diese Restrauhigkeit kann durch verschiedene Transformationen in verschiedene Lagen gebracht werden. Es entstehen damit verschiedene Restrauhigkeiten, die die gleiche Grundstruktur haben, aber verschiedene örtlich Anordnung aufweisen. Diese sind in der Figur mit $\bar{L}''_{Djk}$ bezeichnet. Diese Restrauhigkeiten mit verschiedener örtlicher Anordnung werden einem Schaltungsblock 7 zugeführt, der das sogenannte Ausgleichsproblem löst.

Die in dem Block 1 ebenfalls gebildeten Rangeblöcke werden in einem Schaltungsblock 8 zwischengespeichert. Dem Block 8 ist ein Block 9 nachgeschaltet, der aus den Bilddaten eines Rangeblockes eine sequentielle Folge erzeugt. Diese arbeitet entsprechend Block 2 für die Domainblöcke. Dem Block 9 ist ein Schaltungselement zum Abspalten der Polynomterme 10 nachgeschaltet, das entsprechend dem Schaltungsblock 3 für die Domainblöcke arbeitet. Damit liefert der Schaltungsblock 10 ausgangsseitig einerseits die Polynomterme der Rangeblöcke $P_{Ri}$ und die Restrauhigkeiten $\bar{L}_{Ri}$.

Diese Restrauhigkeiten der Rangeblöcke $\bar{L}_{Ri}$ gelangen ebenso wie die bezüglich ihrer örtlichen Anordnung variierten Restrauhigkeiten $\bar{L}''_{Djk}$ der Domainblöcke zum Schaltungsblock 7.

Im Schaltungsblock 7 wird für die Restrauhigkeit eines bestimmten Rangeblockes derjenige Faktor gesucht, der die örtlich variierten Restrauhigkeiten der Domainblöcke am besten auf die Restrauhigkeit des Rangeblockes abbildet. Es wird also im Ergebnis eine der örtlich variiertn Restrauhigkeiten der Domainblöcke gesucht, die, multipliziert mit dem gesuchten Faktor, eine optimale Abbildung dieser örtlich varrierten Restrauhigkeit des Domainblockes auf die Restrauhigkeit des betrachteten Rangeblockes gestattet.

Der Block 7 liefert ausgangsseitig einerseits ein in der Figur mit $f_i$ bezeichnetes Signal, welches den optimalen Domainblock, dessen örtliche Variation, sowie den zugehörigen gesuchten Faktor s0 angibt. Der Block 7 liefert außerdem die Adresse des Domainblocks, der als optimaler Block gefunden wurde. Diese Adresse wird dem Parameterspeicher 5 zugeführt, aus dem die Parameter des gefundenen Domainblockes ausgelesen werden. Diese Parameter sind in der Fig. 1 mit $P_{Djk,i}$ gekennzeichnet. Diese gelangen an einen Schaltungsblock 11 zur Parameterverrechnung. Diesem Schaltungsblock werden außerdem die Parameter $P_{Ri}$ des Schaltungsblocks 10 zur Abspaltung der Polynomterme der Rangeblöcke zugeführt.

In dem Block 11 wird der für den betrachteten Rangeblock abgespaltene Polynomterm mit den Polynomtermen des als optimal ermittelten Domainblocks verrechnet. Dies geschieht in der Weise, daß die Differenz des Polynomterms des Rangeblockes und der des Polynomterms des als optimal gefundenen Domainblocks gebildet wird, wobei dessen Wert mit dem gefundenen Faktor vor Differenzbildung multipliziert wird.

Damit liefert der in Fig. 1 dargestellte Encoder ausgangsseitig für jeden Rangeblock des codierten Bildes einen Parametersatz $c_i$, der die Parameter der Polynomfunktionen angibt sowie das Signal $f_i$

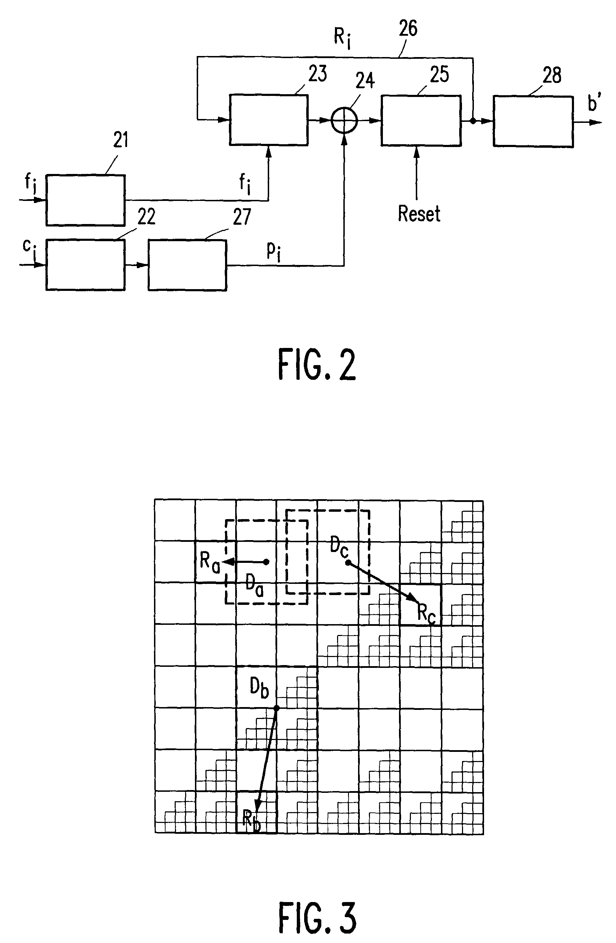

In Fig. 2 ist schematisch in Form eines Blockschaltbildes ein Decoder dargestellt, der die Daten $c_i$ und $f_i$, die der Encoder gemäß Fig. 1 liefert, wieder decodiert, d.h. zur Rekonstruktion des ursprünglichen Bildinhaltes

einsetzt.

Die Daten $f_i$ werden in einen Zwischenspeicher 21 und die Daten $c_i$ in einen Zwischenspeicher 22 eingelesen. In einem dem Speicher 22 nachgeschalteten Schaltungsblock 27 wird eine Rücktransformation der Polynome vorgenommen, d.h. deren Werte werden Bildpunkt für Bildpunkt berechnet. Diese Werte sind in Figur mit $p_i$ gekennzeichnet und werden einem ersten Eingang eines Addierers 24 zugeführt.

Die Ausgangswerte des Speichers 21, bei denen es sich um die zwischengespeicherten Werte $f_i$ handelt, gelangen an einen Schaltungsblock 23, der die Restrauhigkeit in der durch $f_i$ beschriebenen Weise für den als optimal ermittelten Domainblock wieder auf den jeweiligen Rangeblock abbildet. Die Ausgangssignale dieser Abbildung gelangen auf einen zweiten Eingang des Addierers 24. Damit steht am Ausgang 24 das überlagerte Signal zur Verfügung, das einerseits aus der Berechnung der Bilddaten anhand der Polynomfunktionen und andererseits der Abbildung der Restrauhigkeit des gefundenen Domainblocks zu dem jeweiligen Rangeblock sich zusammensetzt.

Dieses Signal gelangt in einen Rekursionsspeicher 25. Da mit einem Vorgang der Abbildung des als optimal gefundenen Domainblocks auf den jeweiligen Rangeblock eine vollständige Rekonstruktion des Bildes noch nicht gelingt, wurde mittels einer Rekursionsschleife 26 eine Rückführung der Ausgangsdaten des Rekursionsspeichers 25 auf den Block 23 zur Abbildung vorgenommen. Es wird auf diese Weise ein iterativer Prozeß durchgeführt, an dessen Ende der Rekursionsspeicher 25 den vollständig rekonstruierten Bildinhalt liefert, der in einen Zwischenspeicher 28 eingelesen wird. Dieser liefert ausgangsseitig das rekonstruierte digitale Bild b'.

Fig. 3 zeigt für einen Ausschnitt eines Bildes exemplarisch einige Rangeblöcke $R_a$, $R_b$ und $R_c$.

Bei den Rangeblöcken $R_a$ bis $R_c$ handelt es sich jedoch nur um eine exemplarisch Darstellung dreier solcher Blöcke eines Bildes. Tatsächlich wird das gesamte Bild in solche Rangeblöcke zerlegt.

Für jeden Rangeblock wird ein Domainblock D gesucht, dessen Datenstruktur unter Anwendung der Transformationsfunktionen mit möglichst geringer Abweichung auf die Datenstruktur des Rangeblockes abgebildet werden kann.

Die Domainblöcke, die gesucht werden, haben dabei doppelte Größe der Rangeblöcke. Die Rangeblöcke haben immer feste Anordnung im Bild, wie dies durch den Bildinhalt vorgegeben ist. Die Domainblöcke sind in ihrer Struktur als solche ebenfalls unverändert, können jedoch in verschiedene Lagen gedreht und gespiegelt werden. Der Vergleich der Datenstruktur der Domainblöcke mit den Rangeblöcken muß für alle diese gedrehten und gespiegelten Positionen ebenfalls vorgenommen werden.

In Fig. 3 ist beispielsweise für den Rangeblock $R_a$ ein Domainblock $D_a$ angedeutet, der gleiche Datenstruktur aufweist. Entsprechendes ist für den Rangeblock $R_c$ und den als günstig gefundenen Rangeblock $D_c$ in der Fig. 3 angedeutet.

Die Suche für die Rangeblöcke $R_a$ und $R_c$ nach geeigneten Domainblöcken gestaltet sich relativ einfach, da die Blöcke keine Datenstruktur aufweisen, sondern konstante Helligkeit ihrer Bildpunkte.

Der in der Fig. 3 exemplarisch eingetragene Rangeblock $R_b$ weist jedoch eine andere Datenstruktur auf. Für diesen Rangeblock ist der ebenfalls angedeutete Domainblock $D_b$ als günstig gefunden worden. Es ist erkennbar, daß unter Anwendung einer Transformationsfunktion dieser Domainblock auf den Rangeblock $R_b$ abbildbar ist. Auch in dem Beispielsfalle $R_b/D_b$ ist eine Drehung des Domainblockes nicht erforderlich.

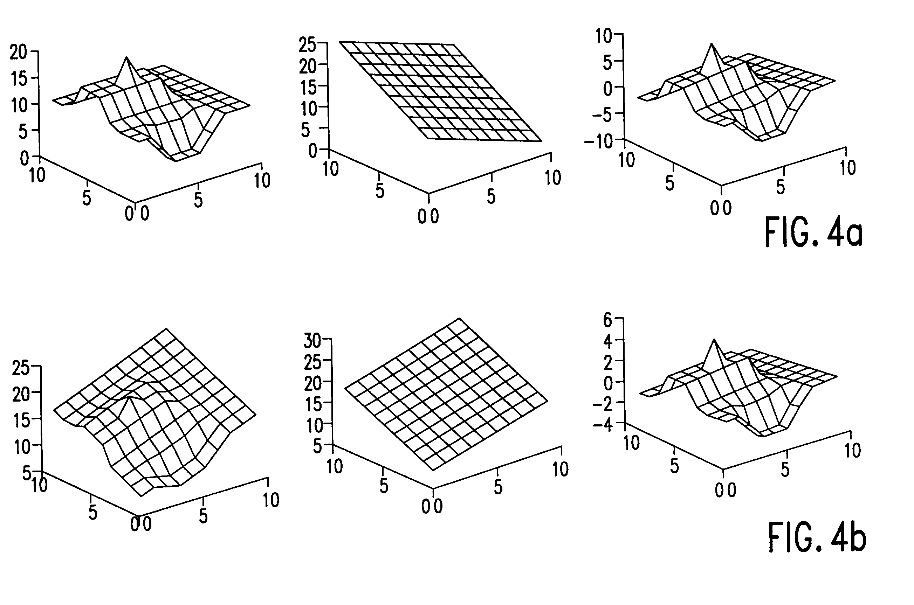

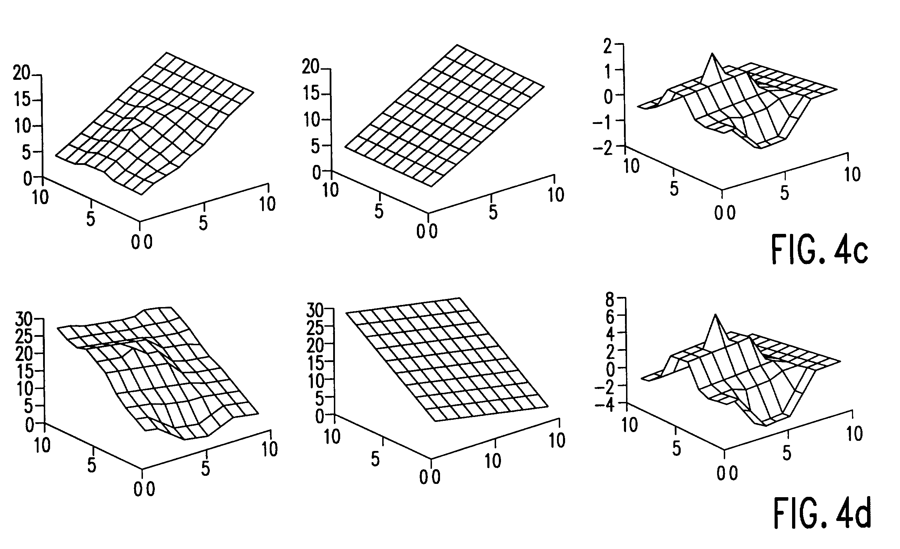

Fig. 4 zeigt in Beispielen a) bis d) einige Beispiele für Datenstrukturen von Domainblöcken.

In der ersten Spalte ist jeweils die Datenstruktur der Domainblöcke Beispiele a), b), c) und d) dargestellt. Es handelt sich jeweils um Blöcke von 10 x 10 Bildpunkten, deren Amplitudenwerte in der Zeichnung in der dritten Dimension aufgetragen sind. Die ursprünglichen Strukturen der Daten der Domainblöcke der Beispiele a) bis d) zeigen deutlich unterschiedliches Aussehen.

In der zweiten Spalte der Darstellung gemäß Fig. 4 ist für die vier Beispielsfälle jeweils eine Polynomoberfläche erster Ordnung dargestellt, die angenähert die Grundstruktur des jeweiligen Domainblockes wiedergibt. Da es sich um Polynome erster Ordnung handelt, handelt es sich um geneigte Flächen.

Erfindungsgemäß werden diese Strukturen entsprechend des gefundenen Polynoms von den Daten des Domainblockes abgezogen. Es ergeben sich dann jeweils die in der dritten Spalte der Fig. 4 dargestellten Differenzwerte, die die Restrauhigkeit wiedergeben. Diese Restrauhigkeit entsteht also dadurch, daß von den Daten des Domainblocks die Daten der Polynomfläche subtrahiert werden.

Obwohl die Domainblöcke in der ersten Spalte deutlich unterschiedlich aussehen, zeigt die dritte Spalte, daß die Restrauhigkeit der vier in der Fig.4 beispielhaft dargestellten Domainblöcke sehr ähnlich bzw. identisch ist. Die erfindungsgemäße Vorgehensweise ist für Rangeblöcke die gleiche wie in Fig. 4 für Domainblöcke dargestellt.

Hier zeigt sich ein wesentlicher Vorteil des Verfahrens gemäß der Erfindung. Die ursprünglich als solche unähnlich erscheinenden Domainblöcke gewinnen nach Subtrahierung einer geometrischen Grundfunktion, hier als Beispiel einer Polynomfunktion erster Ordnung, ähnliche Strukturen, die zunächst nicht zu erkennen waren. Berücksichtigt man, daß auch die Rangeblöcke in gleicher Weise bearbeitet werden, daß also nur noch die Restrauhigkeiten der Rangeblöcke und der Domainblöcke miteinander verglichen werden müssen, so ist es wesentlich einfacher als nach dem Stande der Technik möglich, die wirklich relevanten Strukturen, zu erkennen und damit ähnliche Domainblöcke entsprechenden Rangeblöcken zuzuordnen. Der Suchvorgang wird damit erheblich erleichtert. Außerdem kann die Genauigkeit erhöht werden, was zu einer verbesserten Bildqualität des datenreduzierten und anschließend wieder rückgewonnenen Bildes führt.

**Patentansprüche**

1. Verfahren zur Datenreduktion eines Luminanz- und/oder Farbsignals eines digitalen Bildsignals mittels fraktaler Bildkodierung, bei der jedes Bild des Luminanz-/Farb-Signals in Rangeblöcke mit jeweils n x n Bildpunkten unterteilt wird, bei der für jeden Rangeblock ein Domainblock gesucht wird, der unter Anwendung einer Transformationsfunktion mit möglichst wenig Abweichung auf den Rangeblock abbildbar ist, wobei die Domainblöcke eine größere Größe als die Rangeblöcke aufweisen, und bei der Informationen über die Transformationsfunktionen übertragen werden, aus denen empfängerseitig in einem iterativen Prozeß die Bilddaten zurückgewonnen werden, dadurch gekennzeichnet, daß die Daten jedes Rangeblocks auf geometrische Grundfunktionen untersucht werden, die die Datenstruktur des Rangeblockes möglichst gut angenähert wiedergeben, daß ein Differenzwert aus der gefundenen Grundfunktion, die die Datenstruktur des Rangeblockes am besten erfaßt, und den Daten des Rangeblocks berechnet wird, wobei dieser Differenzwert eine verbleibende Restrauhigkeit repräsentiert, daß die Daten der Domainblöcke auf geometrische Grundfunktionen untersucht werden, die die Datenstruktur des Domainblockes möglichst gut angenähert wiedergeben, daß ein Differenzwert aus der gefundenen Grundfunktion, die die Datenstruktur des Domainblockes am besten erfaßt, und den Daten des Domainblocks berechnet wird, wobei dieser Differenzwert eine verbleibende Restrauhigkeit repräsentiert, daß die Suche des Domainblockes, der auf einen Rangeblock mit der geringsten Abweichung abbildbar ist, und der zugeordneten Transformationsfunktion anhand der berechneten Differenzwerte des Rangeblockes und der berechneten Differenzwerte der Domainblöcke vorgenommen wird und daß für jeden Rangeblock Informationen über die miteinander verrechneten Grundfunktionen dieses Blocks, des als günstigsten ermittelten Domainblocks sowie die Transformationsfunktion, mittels derer der als günstigster ermittelte Domainblock auf den Rangeblock abbildbar ist, als datenreduzierter Datenstrom anstelle des Luminanz-/Farb-Signals übertragen werden.

2. Verfahren nach Anspruch 1, dadurch gekennzeichnet, daß es sich bei den geometrischen Grundfunktionen um Polynome n-ter Ordnung handelt.

3. Verfahren nach Anspruch 1, dadurch gekennzeichnet, daß es sich bei den geometrischen Grundfunktionen um harmonische Grundfunktionen, beispielsweise um eine Diskrete Cosinustransformation oder um eine Fouriertransformation, handelt.

4. Verfahren nach Anspruch 1, dadurch gekennzeichnet, daß es sich bei den geometrischen Grundfunktionen um eine Walsh-Hadamard Transformation handelt.

5. Verfahren nach Anspruch 1, dadurch gekennzeichnet, daß es sich bei den geometrischen Grundfunktionen um Waveletfunktionen handelt.

6. Encoder zur Durchführung des Verfahrens nach einem der Ansprüche 1 bis 5, dadurch gekennzeichnet, daß der Encoder nach Bildung der Rangeblöcke und der Domainblöcke eine Abspaltung der günstigsten Grundfunktion für jeden Block vornimmt, anschließend für jeden Rangeblock einen Vergleich von dessen Differenzwert mit den Differenzwerten der Domainblöcke vornimmt, daß der Encoder eine Verrechnung des Differenzwertes des Rangeblockes und des als günstigsten ermttelten Domainblockes vornimmt, und daß der Encoder diesen verrechneten Differenzwert sowie die Transformationsfunktion, mittels der der ermttelte günstgste Domainblock auf den Rangeblokck abbildbar ist, als Ausgangssignal liefert.

7. Decoder zur Durchführung des Verfahrens nach einem der Ansprüche 1 bis 5, dadurch gekennzeichnet, daß in einem rekursiven Rechenvorgang anhand der übertragenen verrechneten Differenzwerte und der Transformationsfunktionen die Daten jeden Bildpunktes jeden Rangeblocks mittels wiederholter Abbildung des jeweils als günstigsten ermittelten Domainblockes vornimmt.

8. Informationsträger, insbesondere optisch auslesbarer Informationsträger, auf dem ein nach einem der Patentansprüche 1 bis 5 fraktal codiertes Bildsignal aufgezeichnet ist.

9. Speichermedium, insbsondere Datenbank-Speicher, in welchem ein nach einem der Patentansprüche 1 bis 5 fraktal codiertes Bildsignal abgespeichert ist.

10. Rundfunksignal, in welchem ein nach einem der Patentansprüche 1 bis 5 fraktal codiertes Bildsignal enthalten ist.

FIG. 1

EP 0 742 673 A2

FIG. 2

FIG. 3

FIG. 4a

FIG. 4b

EP 0 742 673 A2

FIG. 4c

FIG. 4d

EP 0 742 673 A2